# EUROPEAN PATENT SPECIFICATION

(11) **EP 4 306 567 B1**
(45) Date of publication and mention of the grant of the patent: **04.06.2025**
(21) Application number: 22766710.2
(22) Date of filing: 08.02.2022
(51) Int. Cl.: C09J 163/00, C08L 63/00, C08K 3/01, C08G 59/40, C08G 59/50, C08G 59/18

(54) **CURABLE RESIN COMPOSITION, CURED PRODUCT, AND ADHESIVE**
HÄRTBARE HARZZUSAMMENSETZUNG, GEHÄRTETES PRODUKT UND KLEBSTOFF
COMPOSITION DE RÉSINE DURCISSABLE, PRODUIT DURCI ET ADHÉSIF

(30) Priority: 08.03.2021 JP 2021036705
(43) Date of publication of application: 17.01.2024
(73) Proprietor: ADEKA CORPORATION, Arakawa-ku Tokyo 116-8554 (JP)
(72) Inventor: HIRAYAMA, Kohei, Kuki-shi, Saitama 346-0101 (JP); OTA, Keisuke, Kuki-shi, Saitama 346-0101 (JP); OGAWA, Ryo, Kuki-shi, Saitama 346-0101 (JP); YAMADA, Shinsuke, Kuki-shi, Saitama 346-0101 (JP)
(74) Representative: Forstmeyer, Dietmar
(86) International application number: PCT/JP2022/004965
(87) International publication number: WO 2022/190745

(56) References cited:
- WO-A1-2016/157259
- WO-A1-2020/021968
- JP-A- 2013 170 254
- JP-A- 2014 232 854
- JP-A- 2017 103 332
- JP-A- 2020 200 389
- JP-A- 2021 015 932
- US-A1- 2012 309 923
- US-B2- 8 911 586

## Description

### Technical Field

This invention relates to a curing resin composition, more particularly a curing resin composition containing a cyanate ester resin, an epoxy resin, a latent curing agent, and an ion scavenger.

### Background Art

Epoxy resins are widely used in industry as coatings, adhesives, and various molding materials.

Where use of existing epoxy resins, either alone or in combination, is insufficient in terms of curing rate or heat resistance, a cyanate-epoxy composite resin composition composed of an epoxy resin and a cyanate ester resin has become frequently used as a useful material because of its fast-curing properties and high heat resistance (see, e.g., patent literatures 1 to 6 listed below).

Patent literature 7 discloses a resin composition containing an ion scavenger without mentioning incorporation of the ion scavenger in a cyanate-epoxy resin composition.

Patent literature 8 discloses an insulating adhesive composed of an epoxy resin, a cyanate ester curing agent, and an inorganic ion exchanger but does not suggest a combined use of an active hydrogen-containing amine latent curing agent.

### Citation List

### Patent Literature

Patent literature 1: US 6469074
Patent literature 2: JP 60-250026A
Patent literature 3: US 6342577
Patent literature 4: US 2012/178853
Patent literature 5: US 2012/309923
Patent Literature 6: US 8 911 586 B2
Patent literature 7: US 2019/031790
Patent literature 8: JP 2017-103332A

### Summary of Invention

A cured product of the cyanate-epoxy resin compositions according to patent literatures 1 to 5 sometimes fogs up in a high temperature and high humidity environment. The formation of fog is an issue particularly when the cyanate-epoxy resin composition is used as an adhesive for optical components, such as lenses.

Patent literatures 6 and 7 give no consideration to antifogging properties. In particular, a curing system containing an epoxy resin and a cyanate ester curing agent but not containing an active hydrogen-containing amine latent curing agent, like the one disclosed in patent literature 7, will require high temperatures to cure due to inadequate curing properties and cannot be used in applications such as adhesives.

Accordingly, an object of the present invention is to provide a curing resin composition having excellent curing properties and capable of producing a cured product having high antifogging properties even when exposed to high temperature and high humidity.

As a result of extensive investigations, the inventors have found that the above object is accomplished by a curing resin composition including a cyanate ester resin, an epoxy resin, an active hydrogen-containing amine latent curing agent, and an ion scavenger and reached the invention based on this finding.

The invention provides a curing resin composition including (A) a cyanate ester resin, (B) an epoxy resin, (C) an active hydrogen-containing amine latent curing agent, and (D) an ion scavenger.

The invention also provides a cured product of the curing resin composition and an adhesive containing the curing resin composition.

### Description of Embodiments

The curing resin composition of the invention will be elaborated upon.

The inventors have surmised that an adhesive component decomposes in a high temperature and high humidity environment and the decomposition product reacts with silicon, sodium, or a like component of glass origin, and the reaction product precipitates to cause fogging. They have considered that a component resulting from the decomposition of a cured cyanate-epoxy resin composition in a high temperature and high humidity environment can be trapped by an ion scavenger and have found it effective to incorporate an ion scavenger in a specific cyanate-epoxy resin composition.

The cyanate ester resin as component (A), hereinafter cyanate ester resin (A), is a compound having at least two cyanate groups and is not particularly limited by molecular structure, molecular weight, and so on.

The cyanate ester resin (A) can be at least one member selected from the group consisting of a compound represented by formula (1) below, a compound represented by formula (2) below, and a polymer of at least one of the compound of formula (1) and the compound of formula (2). As used herein, the term "polymer" is intended to include a prepolymer.

NC - O - A¹ - Y¹ - A² - O - CN (1)

wherein Y¹ represents a divalent hydrocarbon group optionally substituted with a fluorine atom or a cyanato group, -O-, -S-, or a single bond; and A¹ and A² each independently represent a phenylene group optionally having one to four hydrogen atoms on its ring replaced with an alkyl group. 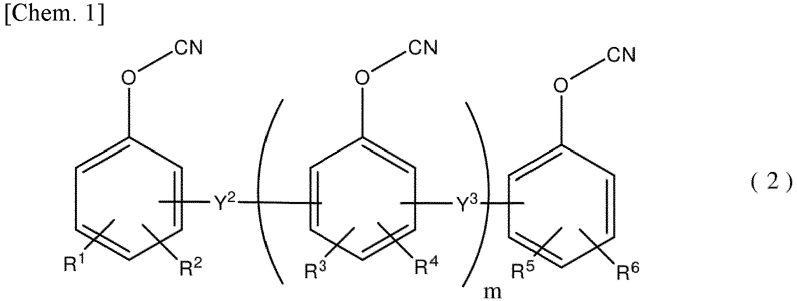 (wherein m is an integer of 1 or greater; Y² and Y³ each independently represent -S- or a divalent hydrocarbon group optionally substituted with a fluorine atom or a cyanato group; and R¹, R², R³, R⁴, R⁵, and R⁶ each independently represent a hydrogen atom or an alkyl group with 1 to 4 carbon atoms.)

Examples of the alkyl group with 1 to 4 carbon atoms include methyl, ethyl, propyl, isopropyl, butyl, isobutyl, sec-butyl, and tert-butyl.

The alkyl group that can replace the hydrogen on the phenylene ring, as represented by A¹ and A² in formula (1), includes C1-C4 alkyl groups.

The divalent hydrocarbon group optionally substituted with a fluorine atom, as represented by Y¹ in formula (1) and Y² and Y³ in formula (2), include those having 1 to 20 carbon atoms. Specifically, it is preferred that Y¹ in formula (1) and Y² and Y³ in formula (2) each have a structure represented by any one of formulae (Y-1) to (Y-9) shown below in terms of availability. 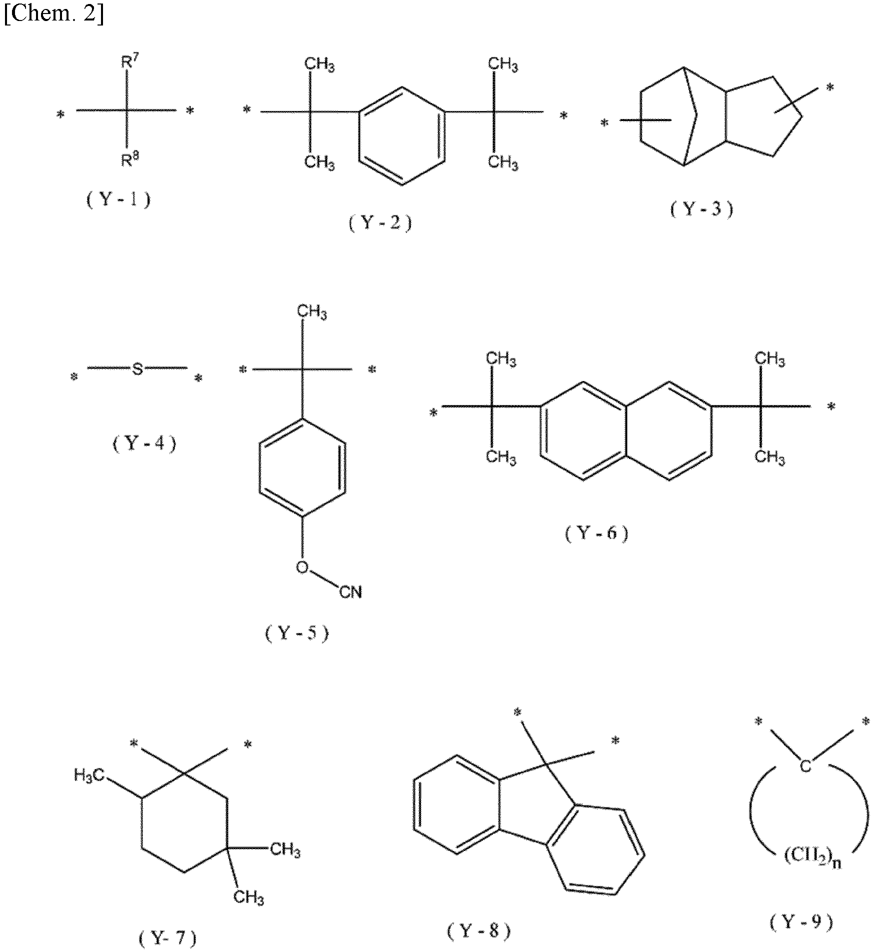 wherein n represents an integer of 4 to 12; R⁷ and R⁸ each independently represent a hydrogen atom or a methyl group optionally substituted with a fluorine; and * indicates a bond.

To obtain a cured product with high heat resistance, preferred among the above-recited cyanate ester resins are bisphenol E cyanate ester resins, biphenyl cyanate ester resins, novolak phenol cyanate ester resins, and bisphenol A cyanate ester resins. Bisphenol cyanate ester resins, such as bisphenol E or bisphenol A cyanate ester resins, are exemplified by those of formula (1) in which Y¹ is represented by (Y-1). Biphenyl cyanate ester resins include those of formula (1) in which Y¹ is a single bond. Novolak phenol cyanate ester resins include those of formula (2) in which Y² and Y³ each independently represent (Y-1).

In using a bisphenol, biphenyl, or novolak phenol cyanate ester resin, the bisphenol, biphenyl, or novolak phenol cyanate resin preferably accounts for 80 mass% or more, more preferably 90 mass% or more, of the total cyanate ester resin. It is particularly preferred from the viewpoint of heat resistance that at least 80 mass%, more preferably 90 mass% or more, even more preferably 95 mass% or more, of the total cyanate ester resin be made up of a bisphenol cyanate ester resin.

The cyanate ester resin is preferably present in the curing resin composition in an amount of 5 to 80 parts, more preferably 10 to 60 parts, by mass per 100 parts by mass of the solids content of the composition. As used herein, the term "solids content" refers to the sum of all the components making up the composition except a solvent. The curing resin composition of the invention may or may not contain a solvent. The content of a solvent, if present, in the composition is preferably not more than 5 mass%, more preferably 2 mass% or less.

The epoxy resin for use as component (B), hereinafter epoxy resin (B), has at least two epoxy groups per molecule and is not particularly limited in molecular structure, molecular weight, and so forth.

Examples of the epoxy resin include polyglycidyl ethers of mononuclear polyhydric phenol compounds, such as hydroquinone, resorcin, pyrocatechol, and phloroglucinol; polyglycidyl ethers of polynuclear polyhydric phenol compounds, such as dihydroxynaphthalene, biphenol, methylenebisphenol (i.e., bisphenol F), methylenebis(ortho-cresol), ethylidenebisphenol, isopropylidenebisphenol (i.e., bisphenol A), isopropylidenebis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolak, ortho-cresol novolak, ethylphenol novolak, butylphenol novolak, octylphenol novolak, resorcin novolak, and terpene phenol; polyglycidyl ethers of polyhydric alcohols, such as ethylene glycol, propylene glycol, butylene glycol, hexanediol, polyethylene glycol, polypropylene glycol, thiodiglycol, dicyclopentadiene dimethanol, 2,2-bis(4-hydroxycyclohexyl)propane (i.e., hydrogenated bisphenol A), glycerol, trimethylolpropane, pentaerythritol, sorbitol, and bisphenol A alkylene oxide adducts; homo- or copolymers of glycidyl methacrylate or glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, and endomethylenetetrahydrophthalic acid,; epoxy compounds having a glycidylamino group, such as N,N-diglycidylaniline, bis(4-(N-methyl-N-glycidylamino)phenyl)methane, diglycidyl o-toluidine, N,N-bis(2,3-epoxypropyl)-4-(2,3-epoxypropoxy)-2-methylaniline, N,N-bis(2,3-epoxypropyl)-4-(2,3-epoxypropoxy)aniline, and N,N,N',N'-tetra(2,3-epoxypropyl)-4,4-diaminodiphenylmethane; epoxidized cyclic olefin compounds, such as vinylcyclohexene diepoxide, cyclopentanediene diepoxide, 3,4-epoxycyclohexylmethyl 3,4-epoxycyclohexanecarboxylate, 3,4-epoxy-6-methylcyclohexylmethyl 6-methylcyclohexanecarboxylate, and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate. These epoxy resins may be internally crosslinked by an isocyanate-terminated prepolymer, or their molecular weight may be increased using a polyactive hydrogen compound, e.g., a polyhydric phenol, a polyamine, a carbonyl-containing compound, or a polyphosphoric ester. The epoxy resins may be used either individually or in combination of two or more thereof.

Preferred of the recited epoxy resins in terms of reactivity are glycidyl epoxy resins having a glycidyl group, especially at least one of polyglycidyl ethers of polynuclear polyhydric phenol compounds, epoxy compounds having a glycidylamino group, and polyglycidyl ether compounds (specifically diglycidyl ether compounds) of dicyclopentadienedimethanol. The use of the polyglycidyl ether of a polynuclear polyhydric phenol compound is preferred in terms of heat resistance. The use of the epoxy compound having a glycidylamino group is advantageous in terms of reactivity and heat resistance. The use of the dicyclopentadienedimethanol polyglycidyl ether is beneficial in imparting adhesiveness.

The "glycidylamino group" referred to herein may be monofunctional or bifunctional but is preferably bifunctional, meaning "diglycidylamino group". The preferred numerical range of the amount of "an epoxy compound having a glycidylamino group", which will appear later, may be the preferred numerical range of the amount of "an epoxy compound having a diglycidylamino group".

The epoxy resin (B) preferably contains 1.1 to 10 epoxy groups per molecule for heat resistance and one-component stability. More preferably, the number of epoxy groups per molecule is 2 to 4.

The epoxy resin (B) preferably has an epoxy equivalent (g/eq) of 50 or greater, more preferably 60 to 30,000, even more preferably 70 to 20,000, in terms of heat resistance.

The epoxy resin (B) preferably has a molecular weight of 150 to 80,000, more preferably 200 to 10,000, from the standpoint of heat resistance. When the epoxy resin is a polymer, the molecular weight can be determined as a weight average molecular weight, which is obtained by, for example, gel-permeation chromatography (GPC) using polystyrene standards. For example, GPC can be carried out using a GPC system of LC-2000 plus series available from JASCO Corp. with columns KF-804, KF-803, and KF-802 from Showa Denko (column temperature: 40°C), tetrahydrofuran as an elution solvent, and polystyrene standards for calibration with Mw of 1,110,000, 707,000, 397,000, 189,000, 98,900, 37,200, 13,700, 9,490, 5,430, 3,120, 1,010, and 589 from Tosoh Corp. The flow rate can be 1.0 mL/min.

In order to obtain a cured product with excellent physical properties, the epoxy resin (B) is preferably used in an amount of 1 to 1000 parts, more preferably 3 to 500 parts, even more preferably 5 to 200 parts, by mass per 100 parts by mass of the cyanate ester resin (A).

When the epoxy resin (B) includes an epoxy compound having a glycidyl group, the proportion of the epoxy compound having a glycidyl group is preferably 80 to 100 parts by mass, more preferably 95 to 100 parts by mass, relative to 100 parts by mass of the total epoxy resin (B).

When the epoxy resin (B) includes a polyglycidyl ether compound of a polynuclear polyhydric phenol compound, the proportion of the polyglycidyl ether compound of a polynuclear polyhydric phenol compound is preferably 10 to 90 parts by mass, more preferably 20 to 80 parts by mass, relative to 100 parts by mass of the total epoxy resin (B).

When the epoxy resin (B)includes an epoxy compound having a glycidylamino group, the proportion of the epoxy compound having a glycidylamino group is preferably 5 parts or more, more preferably 10 to 80 parts, even more preferably 20 to 80 parts, by mass relative to 100 parts by mass of the total epoxy resin (B).

When the epoxy resin (B) includes a polyglycidyl ether compound of dicyclopentadienedimethanol, the proportion of the polyglycidyl ether compound of dicyclopentadienedimethanol is preferably 5 parts by mass, more preferably 10 to 80 parts by mass, even more preferably 15 to 80 parts by mass, relative to 100 parts by mass of the total epoxy resin (B).

The invention utilizes an active hydrogen-containing amine latent curing agent to achieve excellent reactivity and one-component stability effects.

Examples of the active hydrogen-containing amine latent curing agent as component (C), hereinafter active hydrogen-containing amine latent curing agent (C), include dibasic acid dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, and phthalic acid dihydrazide; guanidine compounds, such as dicyandiamide, benzoguanamine, and acetoguanamine; melamine; and modified amines, such as amine-carboxylic acid dehydration condensation products, amine-epoxy adducts, amine-isocyanate adducts, amine Michael adducts, amine Mannich reaction products, amine-urea condensation products, and amine-ketone condensation products.

Preferred of the active hydrogen-containing amine latent curing agents (C) is a guanidine compound, such as dicyandiamide, benzoguanamine, and acetoguanamine; or at least one of (C-1) a modified amine obtained by the reaction between an amine compound having at least one active hydrogen and an epoxy compound; (C-2) a modified amine obtained by the reaction between an amine compound having at least one active hydrogen and an isocyanate compound; (C-3) a modified amine obtained by the reaction between an amine compound having at least one active hydrogen, an epoxy compound, and an isocyanate compound; and (C-4) a latent curing agent composed of at least one modified amine selected from (C-1), (C-2), and (C-3) recited above and a phenol resin.

Examples of the amine compound having at least one active hydrogen include alkylenediamines, such as ethylenediamine, 1,2-diaminopropane, 1,3-diaminopropane, 1,3-diaminobutane, 1,4-diaminobutane, and hexamethylenediamine; polyalkylpolyamines, such as diethylenetriamine, triethylenetriamine, and tetraethylenepentamine; alicyclic polyamines, such as 1,4-diaminocyclohexane, 1,3-diaminocyclohexane, 1,3-diaminomethylcyclohexane, 1,2-diaminocyclohexane, 1,4-diamino-3,6-diethylcyclohexane, 4,4'-diaminodicyclohexylmethane, 1,3-bis(aminomethyl)cyclohexane, 1,4-bis(aminomethyl)cyclohexane, 4,4'-diaminodicyclohexylpropane, bis(4-aminocyclohexyl) sulfone, 4,4'-diaminodicyclohexyl ether, 2,2'-dimethyl-4,4'-diaminodicyclohexylmethane, isophoronediamine, and norbornenediamine; aromatic polyamines, such as m-xylylenediamine, diaminodiphenylmethane, diaminodiphenyl sulfone, diethyl toluene diamine, 1-methyl-3,5-diethyl-2,4-diaminobenzene, 1-methyl-3,5-diethyl-2,6-diaminobenzene, 1,3,5-triethyl-2,6-diaminobenzene, 3,3'-diethyl-4,4'-diaminodiphenylmethane, and 3,5,3',5'-tetramethyl-4,4'-diaminodiphenylmethane; guanamines, such as benzoguanamine and acetoguanamine; imidazoles, such as 2-methylimidazole, 2-ethyl-4-methylimidazole, 2-isopropylimidazole, 2-undecylimidazole, 2-heptadecylimidazole, 2-phenylimidazole, 2-phenyl-4-methylimidazole, and 2-aminopropylimidazole; dihydrazides, such as oxalic acid dihydrazide, malonic acid dihydrazide, succinic acid dihydrazide, glutaric acid dihydrazide, adipic acid dihydrazide, suberic acid dihydrazide, azelaic acid dihydrazide, sebacic acid dihydrazide, and phthalic acid dihydrazide; N,N-dimethylaminoethylamine, N,N-diethylaminoethylamine, N,N-diisopropylaminoethylamine, N,N-diallylaminoethylamine, N,N-benzylmethylaminoethylamine, N,N-dibenzylaminoethylamine, N,N-cyclohexylmethylaminoethylamine, N,N-dicyclohexylaminoethylamine, N-(2-aminoethyl)pyrrolidine, N-(2-aminoethyl)piperidine, N-(2-aminoethyl)morpholine, N-(2-aminoethyl)piperazine, N-(2-aminoethyl)-N'-methylpiperazine, N,N-dimethylaminopropylamine, N,N-diethylaminopropylamine, N,N-diisopropylaminopropylamine, N,N-diallylaminopropylamine, N,N-benzylmethylaminopropylamine, N,N-dibenzylaminopropylamine, N,N-cyclohexylmethylaminopropylamine, N,N-dicyclohexylaminopropylamine, N-(3-aminopropyl)pyrrolidine, N-(3-aminopropyl)piperidine, N-(3-aminopropyl)morpholine, N-(3-aminopropyl)piperazine, N-(3-aminopropyl)-N'-methylpiperidine, 4-(N,N-dimethylamino)benzylamine, 4-(N,N-diethylamino)benzylamine, 4-(N,N-diisopropylamino)benzylamine, N,N-dimethylisophoronediamine, N,N-dimethylbisaminocyclohexane, N,N,N'-trimethylethylenediamine, N'-ethyl-N,N-dimethylethylenediamine, N,N,N'-trimethylethylenediamine, N'-ethyl-N,N-dimethylpropanediamine, N'-ethyl-N,N-dibenzylaminopropylamine, N,N-(bisaminopropyl)-N-methylamine, N,N-bisaminopropylethylamine, N,N-bisaminopropylpropylamine, N,N-bisaminopropylbutylamine, N,N-bisaminopropylpentylamine, N,N-bisaminopropylhexylamine, N,N-bisaminopropyl-2-ethylhexylamine, N,N-bisaminopropylcyclohexylamine, N,N-bisaminopropylbenzylamine, N,N-bisaminopropylallylamine, bis[3-(N,N-dimethylaminopropyl)]amine, bis[3-(N,N-diethylaminopropyl)]amine, bis[3-(N,N-diisopropylaminopropyl)]amine, and bis[3-(N,N-dibutylaminopropyl)]amine.

From the viewpoint of the balance between curing properties and storage stability, the active hydrogen equivalent (g/eq) of the amine compound preferably ranges from 10 to 300, more preferably 15 to 150.

Examples of the epoxy compound include polyglycidyl ethers of mononuclear polyhydric phenol compounds, such as hydroquinone, resorcin, pyrocatechol, and phloroglucinol; polyglycidyl ethers of polynuclear polyhydric phenol compounds, such as dihydroxynaphthalene, biphenol, methylenebisphenol (i.e., bisphenol F), methylenebis(ortho-cresol), ethylidenebisphenol, isopropylidenebisphenol (i.e., bisphenol A), isopropylidenebis(ortho-cresol), tetrabromobisphenol A, 1,3-bis(4-hydroxycumylbenzene), 1,4-bis(4-hydroxycumylbenzene), 1,1,3-tris(4-hydroxyphenyl)butane, 1,1,2,2-tetra(4-hydroxyphenyl)ethane, thiobisphenol, sulfobisphenol, oxybisphenol, phenol novolak, ortho-cresol novolak, ethylphenol novolak, butylphenol novolak, octylphenol novolak, resorcin novolak, and terpene phenol; polyglycidyl ethers of polyhydric alcohols, such as ethylene glycol, propylene glycol, butylene glycol, hexanediol, polyglycol, thiodiglycol, glycerol, trimethylolpropane, pentaerythritol, sorbitol, and bisphenol A alkylene oxide adducts; homo- or copolymers of glycidyl methacrylate or glycidyl esters of aliphatic, aromatic or alicyclic polybasic acids, such as maleic acid, fumaric acid, itaconic acid, succinic acid, glutaric acid, suberic acid, adipic acid, azelaic acid, sebacic acid, dimer acid, trimer acid, phthalic acid, isophthalic acid, terephthalic acid, trimellitic acid, trimesic acid, pyromellitic acid, tetrahydrophthalic acid, hexahydrophthalic acid, and endomethylenetetrahydrophthalic acid; epoxy compounds having a glycidylamino group, such as N,N-diglycidylaniline, bis(4-(N-methyl-N-glycidylamino)phenyl)methane, and diglycidyl o-toluidine; epoxidized cyclic olefin compounds, such as vinylcyclohexene diepoxide, dicyclopentanediene diepoxide, 3,4-epoxycyclohexylmethyl 3,4-epoxycyclohexanecarboxylate, 3,4-epoxy-6-methylcyclohexylmethyl 6-methylcyclohexanecarboxylate, and bis(3,4-epoxy-6-methylcyclohexylmethyl) adipate; epoxidized conjugated diene polymers, such as epoxidized polybutadiene and epoxidized styrene-butadiene copolymers; and heterocyclic compounds, such as triglycidyl isocyanurate.

The epoxy compound may be either of glycidyl type having a glycidyl group and cycloalkene oxide type represented by epoxidized cyclic olefin compounds. The glycidyl type epoxy compound may be either aromatic or aliphatic. It is preferable to use a glycidyl type epoxy compound in terms of reactivity. It is more preferable to use a glycidyl type aromatic epoxy compound in terms of heat resistance.

Examples of the isocyanate compound include aromatic diisocyanates, such as 2,4-tolylene diisocyanate, 2,6-tolylene diisocyanate, diphenylmethane 4,4'-diisocyanate, phenylene diisocyanate, xylylene diisocyanate, tetramethylxylylene diisocyanate, 1,5-naphthylene diisocyanate, 1,5-tetrahydronaphthalene diisocyanate, 3,3'-dimethylbiphenyl 4,4'-diisocyanate, dianisidine diisocyanate, and tetramethylxylylene diisocyanate; alicyclic diisocyanates, such as isophorone diisocyanate, dicyclohexylmethane-4,4'-diisocyanate, trans-1,4-cyclohexyl diisocyanate, and norbornene diisocyanate; aliphatic diisocyanates, such as tetramethylene diisocyanate, 1,6-hexamethylene diisocyanate, 2,2,4- and/or (2,4,4)-trimethylhexamethylene diisocyanate, and lysine diisocyanate; isocyanurate trimers, biuret trimers, and trimethylolpropane adducts of the above-recited diisocyanate compounds; triphenylmethane triisocyanate, 1-methylbenzole 2,4,6-triisocyanate, and dimethyltriphenylmethane tetraisocyanate.

These isocyanate compounds may be modified, e.g., carbodiimide-modified, isocyanurate-modified, or biuret-modified, or blocked with various blocking agents.

In the preparation of the modified amine (C-1), the amine compound having at least one active hydrogen and the epoxy compound are caused to react, preferably in a quantity ratio of 0.1 to 0.9 equivalents, more preferably 0.2 to 0.8 equivalents, of epoxy groups in the epoxy compound to 1 equivalent of active hydrogen in the amine compound.

In the preparation of the modified amine (C-2), the amine compound having at least one active hydrogen and the isocyanate compound are caused to react, preferably in a quantity ratio of 0.1 to 0.9 equivalents, more preferably 0.2 to 0.8 equivalents, of isocyanate groups in the isocyanate compound to 1 equivalent of active hydrogen in the amine compound.

In the preparation of the modified amine (C-3), the amine compound having at least one active hydrogen, the epoxy compound, and the isocyanate compound are caused to react, preferably in a quantity ratio of a total of 0.1 to 0.9 equivalents, more preferably 0.2 to 0.8 equivalents, of the epoxy groups of the epoxy compound and the isocyanate groups in the isocyanate compound to 1 equivalent of active hydrogen in the amine compound.

Setting the amount of the epoxy compound and/or the isocyanate compound relative to the amine compound having at least one active hydrogen at or above the lower limit above is desirable because it improves the storage stability of the curing resin composition, and setting it at or below the upper limit above is desirable because it provides reliable curability of the composition.

The methods for preparing the modified amines (C-1), (C-2), and (C-3) are not particularly restricted. For example, the reaction can be performed at room temperature or under heating up to 140°C for 1 to 10 hours using, if necessary, a solvent.

In the preparation of the modified amine (C-3), it is usually preferred that the reaction between the amine compound and the epoxy compound precede the reaction with the polyisocyanate compound. When a solvent is used, it may be removed after completion of the reaction by heating under atmospheric pressure or reduced pressure.

Examples of the solvent that can be used in the preparation of the modified amines include ketones, such as methyl ethyl ketone, methyl amyl ketone, diethyl ketone, acetone, methyl isopropyl ketone, propylene glycol monomethyl ether acetate, and cyclohexane; ethers, such as tetrahydrofuran, 1,2-dimethoxyethane, 1,2-diethoxyethane, and propylene glycol monomethyl ether; esters, such as ethyl acetate and n-butyl acetate; aromatic hydrocarbons, such as benzene, toluene, and xylene; halogenated aliphatic hydrocarbons, such as carbon tetrachloride, chloroform, trichloroethylene, and methylene chloride; and halogenated aromatic hydrocarbons, such as chlorobenzene.

The phenol resin used in the latent curing agent (C-4) includes polyhydric phenol compounds, such as phenol novolac resin, cresol novolac resin, aromatic hydrocarbon formaldehyde resin-modified phenolic resin, dicyclopentadiene-phenol addition-type resin, phenol aralkyl resin (Xylok resin), naphthol aralkyl resin, trisphenylol methane resin, tetraphenylol ethane resin, naphthol novolac resin, naphthol-phenol co-condensed novolac resin, naphthol-cresol co-condensed novolac resin, biphenyl-modified phenolic resin (a polyhydric phenol compound wherein phenol nuclei are linked by a bismethylene group), biphenyl-modified naphthol resin (a polyhydric naphthol compound wherein phenol nuclei are linked by a bismethylene group), aminotriazine-modified phenolic resin (a compound containing a phenol skeleton, a triazine ring and a primary amino group in its molecular structure), and alkoxy group-containing aromatic ring-modified novolac resin (a polyhydric phenol compound wherein a phenol nucleus and an alkoxy group-containing aromatic ring are linked by formaldehyde).

To obtain a good balance between storage stability and curing properties of the curing resin composition, it is preferred for the phenol resin used in the latent curing agent (C-4) to have a softening temperature of 50° to 200°C.

The proportion of the phenol resin in the latent curing agent (C-4) is preferably 10 to 100 parts, more preferably 20 to 60 parts, by mass per 100 parts by mass of the total of the modified amines (C-1), (C-2), and (C-3). Sufficient curing properties are obtained with 10 parts or more of the phenol resin, and reduction in physical properties of a cured product will be avoided more reliably as long as the proportion of the phenol resin is 100 parts by mass of less.

The latent curing agent (C-1) to (C-4) may be comminuted using an apparatus such as a jet mill.

Commercially available latent curing agents that can be used in the invention as the active hydrogen-containing amine latent curing agent (C) include ADEKA Hardener EH-3636AS (dicyandiamide type), ADEKA Hardener EH-4351S (dicyandiamide type), ADEKA Hardener EH-5011S (imidazole type), ADEKA Hardener EH-5046S (imidazole type), ADEKA Hardener EH-4357S (polyamine type), ADEKA Hardener EH-5057P (polyamine type), and ADEKA Hardener EH-5057PK (polyamine type), all available from Adeka Corp.; Amicure PN-23 (amine adduct type), Amicure PN-40 (amine adduct type), and Amicure VDH (hydrazide type), all from Ajinomoto Finetechno Co., Ltd.; and Fujicure FXR-1020 (from T&K TOKA Co., Ltd.).

The content of the active hydrogen-containing amine latent curing agent (C) in the curing resin composition is not particularly limited but is preferably 1 to 70 parts, more preferably 3 to 60 parts, by mass per 100 parts by mass of the sum of the cyanate ester resin (A) and the epoxy resin (B), in view of one-component stability.

If necessary, the curing resin composition of the invention may further contain a known curing accelerator in combination with the active hydrogen-containing amine latent curing agent. Examples of useful curing accelerators include phosphines, such as triphenylphosphine; phosphonium salts, such as tetraphenylphosphonium bromide; imidazoles, such as 2-methylimidazole, 2-phenylimidazole, 2-ethyl-4-methylimidazole, 2-undecylimidazole, and 1-cyanoethyl-2-methylimidazole; imidazole salts between the imidazole compound recited above and trimellitic acid, isocyanuric acid, boron, and so on; amines, such as benzyldimethylamine and 2,4,6-tris(dimethylaminomethyl)phenol; quaternary ammonium salts, such as trimethylammonium chloride; ureas, such as 3-(p-chlorophenyl)-1,1-dimethylurea, 3-(3,4-dichlorophenyl)-1,1-dimethylurea, 3-phenyl-1,1-dimethylurea, isophorone diisocyanate-dimethylurea, and tolylene diisocyanate-dimethylurea; and complex compounds between boron trifluoride and amines, ether compounds, and so forth. The curing accelerators may be used either individually or in combination thereof. The curing accelerator content in the curing resin composition is not particularly limited and is decided as appropriate to the intended use of the curing resin composition.

The ion scavenger as component (D), hereinafter ion scavenger (D), preferably has an ion exchange capacity of at least 1.0 meq/g in terms of high antifogging performance in high temperature and high humidity conditions. The upper limit of the ion exchange capacity is usually 10 meq/g or less.

The ion exchange capacity of an ion scavenger can be determined using inductively coupled plasma atomic emission spectroscopy (ICP-AES). For this purpose, the method described in WO 2008/053694 can be employed as follows.

One gram of a sample is combined with 50 mL of a 0.1 mol/L sodium hydroxide aqueous solution in a 100 mL polyethylene bottle. The mixture is shaken at 40°C for 20 hours. Subsequently, the supernatant of the mixture was analyzed by ICP-AES to find the concentration of sodium ions. To calculate the ion exchange capacity of the sample, a blank value is obtained by performing the same sodium ion concentration measurement procedure as described above, with the exception that no sample is added.

The ion scavenger (D) suitably has at least cation scavenging ability. It is also preferred for the ion scavenger to have the ability to scavenge both cations and anions.

The ion scavenger (D) is a material capable of trapping degradation products resulting from the curing resin composition exposed to a high temperature and high humidity environment. While this material may be organic or inorganic, an inorganic ion scavenger is preferred due to its excellent heat resistance. In particular, inorganic fine particles having ion scavenging capability are preferred because of uniform dispersibility in the curing resin composition.

Inorganic fine particles having ion scavenging capability preferably contain at least one metallic element selected from zirconium, antimony, bismuth, aluminum, magnesium, yttrium, lanthanum, and neodymium with a view to excellent capability of scavenging decomposition products of glass under a high temperature and high humidity condition. The composition of the inorganic fine particles containing a metallic element may be either an elemental metal or a metal compound, but a metal compound is preferred due to its excellent capability of scavenging decomposition products from glass exposed to high temperature and high humidity. Specific examples of the inorganic, finely particulate ion scavengers include zirconium phosphate, zirconium tungstate, zirconium molybdate, zirconium antimonate, zirconium selenate, zirconium tellurate, zirconium silicate, zirconium phosphosilicate, zirconium polyphosphate, bismuth oxide compounds, bismuth hydroxide compounds, yttrium oxide, lanthanum oxide, neodymium oxide, magnesium aluminum complex oxide, hydrotalcite, hydrocalumite, hydroxamate, zeolite, other metal complex compounds, and mixtures thereof. These ion scavengers can be either naturally-occurring or artificial.

The ion scavenger preferably has an average particle size of 0.001 to 100 µm, more preferably 0.01 to 20 µm, in order to exhibit excellent scavenging capability for glass decomposition products in a high temperature and high humidity condition, as measured by the laser diffraction method. More specifically, the volume-based particle size distribution of the inorganic ion scavenger is determined using a laser diffraction particle size analyzer, with the median diameter of the distribution curve serving as the designated average particle size.

Among the above-mentioned ion scavengers, inorganic fine particles containing magnesium, aluminum, and zirconium are preferred due to their beneficial impact on antifogging properties. Specifically, ion scavengers containing magnesium, aluminum, and zirconium having an average particle size (median diameter) of from 0.01 to 10 µm, and particularly those without bismuth, exhibit outstanding effectiveness in improving antifogging properties.

Commercially available products of the aforementioned ion scavengers include IXE-100, IXE-300, IXE-500, IXE-530, IXE-550, IXE-600, IXE-633, IXE-700F, IXE-770D, IXE-800, IXE-1000, IXE-6107, IXE-6136, IXEPLAS-A1, IXEPLAS-A2, and IXPLAS-B1 (all from Toagosei Co., Ltd.) and; Kyowaad 200, Kyowaad 500, Kyowaad 600, Kyowaad 700, KW-2000, and DHT-4A (all from Kyowa Chemical Ind. Co., Ltd.). Particularly preferred among them are IXEPLAS-A1 and A2.

The ion scavenger (D) is preferably used in an amount of 0.01 to 5 parts, more preferably 0.1 to 5 parts, even more preferably 1 to 5 parts, still even more preferably 1.5 to 5 parts, by mass per 100 parts by mass of the sum of components (A), (B), and (C). A minimum of 0.01 parts by mass of the ion scavenger produces a substantial effect in improving antifogging properties. With the amount of the ion scavenger being not more than 10 parts by mass, the risk of adverse effects on the physical properties of a cured product of the resin composition can be avoided.

The curing resin composition of the invention may further contain a phosphorus antioxidant, a phenol antioxidant, or a sulfur antioxidant.

Examples of the phosphorus antioxidants include triphenyl phosphite, tris(2,4-di-t-butylphenyl) phosphite, tris(nonylphenyl) phosphite, tris(dinonylphenyl) phosphite, tris(mono-, di-mixed nonylphenyl) phosphite, bis(2-t-butyl-4,6-dimethylphenyl)ethyl phosphite, diphenyl acid phosphite, 2,2'-methylenebis(4,6-di-t-butylphenyl)octyl phosphite, diphenyldecyl phosphite, phenyldiisodecyl phosphite, tributyl phosphite, tris(2-ethylhexyl) phosphite, tridecyl phosphite, trilauryl phosphite, dibutyl acid phosphite, dilauryl acid phosphite, trilauryl trithiophosphite, bis(neopentyl glycol) 1,4-cyclohexane dimethyl diphosphite, bis(2,4-di-t-butylphenyl)pentaerythritol diphosphite, bis(2,6-di-t-butyl-4-methylphenyl)pentaerythritol diphosphite, distearyl pentaerythritol diphosphite, phenyl-4,4'-isopropylidenediphenol pentaerythritol diphosphite, tetra(C12-C15 mixed alkyl)-4,4'-isopropylidene diphenylphosphite, bis[2,2'-methylenebis(4,6-diamylphenyl)] isopropylidene diphenylphosphite, hydrogenated 4,4'-isopropylidenediphenol polyphosphite, bis(octylphenyl) bis[4,4'-n-butylidenebis(2-t-butyl-5-methylphenol)] 1,6-hexanediol diphosphite, tetratridecyl 4,4'-butylidenebis(2-t-butyl-5-methylphenol) diphosphite, hexa(tridecyl) 1,1,3-tris(2-methyl-5-t-butyl-4-hydroxyphenyl)butane triphosphonite, 9,10-dihydro-9-oxa-10-phosphaphenanthrene 10-oxide, and 2-butyl-2-ethylpropanediol 2,4,6-tri-t-butylphenol monophosphite.

Examples of the phenol antioxidant include 2,6-di-t-butyl-p-cresol, 2,6-diphenyl-4-octadecyloxyphenol, stearyl (3,5-di-t-butyl-4-hydroxyphenyl)propionate, distearyl (3,5-di-t-butyl-4-hydroxybenzyl)phosphonate, tridecyl 3,5-di-t-butyl-4-hydroxybenzylthioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid] glycol ester, 4,4'-butylidenebis(4,6-di-t-butylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl] terephthalate, 1,3,5-tris[(2,6-dimethyl-3-hydroxy-5-t-butylbenzyl) isocyanurate, 1,3,5-tris(3,5-di-t-butyl-4-hydroxybenzyl) isocyanurate, 1,3,5-tris(3,5-di-t-butuyl-4-hydroxybenzyl)-2,4,6-trimethylbenzene, 1,3,5-tris[(3,5-di-t-butyl-4-hydroxyphenyl)propionyloxyethyl] isocyanurate, tetrakis[methylene-3-(3,5-di-t-butyl-4-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydroxycinnamoyloxy)-1,1-dimethylethyl]-2,4,8, 10-tetraoxaspiro[5,5]undecane, and triethylene glycol bis[β-(3-t-butyl-4-hydroxy-5-methylphenyl)propionate].

Examples of the sulfur antioxidant include dialkyl thiodipropionates, such as dilauryl, dimyristyl, myristylstearyl, and distearyl esters of thiodipropionic acid; and polyol β-alkylmercaptopropionic acid esters, such as pentaerythritol tetra(β-dodecylmercaptopropionate).

The curing resin composition of the invention may contain an ultraviolet (UV) absorber or a hindered amine light stabilizer.

Examples of the UV absorber include 2-hydroxybenzophenones, such as 2,4-dihydroxybenzophenone, 2-hydroxy-4-methoxybenzophenone, 2-hydroxy-4-octoxybenzophenone, 2-hydroxy-4-t-butyl-4'-(2-methacryloyloxyethoxyethoxy)benzophenone, and 5,5'-methylenebis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-t-octylphenyl)benzotriazole, 2-(2-hydroxy-3,5-di-t-butylphenyl)-5-chlorobenzotriazole, 2-(2-hydroxy-3-t-butyl-5-methylphenyl)-5-chlorobenzotriazole, 2-(2-hydroxy-3-dodecyl-5-methylphenyl)benzotriazole, 2-(2-hydroxy-3-t-butyl-5-(C7-C9 mixed)alkoxycarbonylethylphenyl)triazole, 2-(2-hydroxy-3,5-dicumylphenyl)benzotriazole, 2,2'-methylenebis(4-t-octyl-6-benzotriazolylphenol), and polyethylene glycol ester of 2-(2-hydroxy-3-t-butyl-5-carboxyphenyl)benzotriazole; 2-(2-hydroxyphenyl)-1,3,5-triazines, such as 2-(2-hydroxy-4-hexyloxyphenyl)-4,6-diphenyl-1,3,5-triazine,2-(2-hydroxy-4-methoxyphe nyl)-4,6-diphenyl-1,3,5-triazine, and 2-(2-hydroxy-4-octoxyphenyl)-4,6-bis(2,4-dimethylphenyl)-1,3,5-triazine; benzoates, such as phenyl salicylate, resorcinol monobenzoate, 2,4-di-t-butylphenyl 3,5-di-t-butyl-4-hydroxybenzoate, 2,4-di-t-amylphenyl-3,5-di-t-butyl-4-hydroxybenzoate, and hexadecyl 3,5-di-t-butyl-4-hydroxybenzoate; substituted oxanilides, such as 2-ethyl-2'-ethoxyoxanilide and 2-ethoxy-4'-dodecyloxanilide; and cyanoacrylates, such as ethyl α-cyano-β,β-diphenylacrylate and methyl 2-cyano-3-methyl-3-(p-methoxyphenyl)acrylate.

Examples of the hindered amine light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis(1,2,2,6,6-pentamethyl-4-piperidyl) sebacate, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate, bis(2,2,6,6-tetramethyl-4-piperidyl) bis(tridecyl) 1,2,3,4-butanetetracarboxylate, bis(1,2,2,6,6-pentamethyl-4-piperidyl) bis(tridecyl) 1,2,3,4-butanetetracarboxylate, bis(1,2,2,6,6-pentamethyl-4-piperidyl)-2-butyl-2-(3,5-di-t-butyl-4-hydroxybenzyl) malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensate, 1,6-bis(2,2,6,6-tetramethyl-4-piperidylamino)hexane/2,4-dichloro-6-morpholino-s-triazin e polycondensate, 1,6-bis(2,2,6,6-tetramethyl-4-piperidylamino)hexane/2,4-dichloro-6-t-octylamino-s-triazi ne polycondensate, 1,5,8,12-tetrakis[2,4-bis(N-butyl-N-(2,2,6,6-tetramethyl-4-piperidyl)amino)-s-triazin-6-yl ]-1,5,8,12-tetraazadodecane, 1,5,8,12-tetrakis[2,4-bis(N-butyl-N-(1,2,2,6,6-pentamethyl-4-piperidyl)amino)-s-triazin-6 -yl]-1,5,8,12-tetraazadodecane, 1,6,11-tris[2,4-bis(N-butyl-N-(2,2,6,6-tetramethyl-4-piperidyl)amino-s-triazin-6-ylamino] undecane, and 1,6,11-tris[2,4-bis(N-butyl-N-(1,2,2,6,6-pentamethyl-4-piperidyl)amino-s-triazin-6-ylami no]undecane.

The curing resin composition of the invention may contain a silane coupling agent. Examples of the silane coupling agent include γ-aminopropyltriethoxysilane, N-β-(aminoethyl)-γ-aminopropyltriethoxysilane, N-β-(aminoethyl)-N'-β-(aminoethyl)-γ-aminopropyltriethoxysilane, γ-anilinopropyltriethoxysilane, γ-glycidoxypropyltriethoxysilane, β-(3,4-epoxycyclohexyl)ethyltriethoxysilane, vinyltriethoxysilane, N-β-(N-vinylbenzylaminoethyl)-γ-aminopropyltriethoxysilane, γ-methacryloxypropyltrimethoxysilane, γ-chloropropyltrimethoxysilane, γ-mercaptopropyltrimethoxysilane, and γ-glycidoxypropyltrimethoxysilane.

The curing resin composition of the invention may contain a filler. Examples of the filler include silica, such as fused silica or crystalline silica; powders and spherized beads of magnesium hydroxide, aluminum hydroxide, zinc molybdate, calcium carbonate, silicon carbonate, calcium silicate, potassium titanate, beryllia, zirconia, zircon, forsterite, steatite, spinel, mullite, titania, and so forth; fibers, such as glass fiber, pulp fiber, synthetic fiber, and ceramic fiber; organic fillers, such as acrylic resins, silicone resins, polystyrene resins, and polyvinylbenzene; rubber fillers, such as acrylonitrile-butadiene rubber (NBR) and styrene-butadiene rubber (SBR); and core-shell-type rubber fillers including, for example, a core constituted by butadiene rubber etc. and a shell constituted by acrylic resin, epoxy resin, etc.

Commercially available fillers that can be utilized in the invention include Metablen^{®} E series, C series, and W series from Mitsubishi Rayon Co., Ltd.; MX series, SX series, and SGP series from Soken Chemical & Engineering Co.; Zefiac series from Aica Kogyo Co., Ltd.; ChromoSphere-T series from Thermo Fisher Scientific K.K.; Estapor^{®} series from Merck Chimie; Fine Pearl^{®} from Matsuura & Co., Ltd.; XER-91P and XER-81P from JSR Corp.; and TMS-2670 from Dow Chemical Co.

From the viewpoint of workability as a one-component curing resin composition, the content of the filler, if used, in the curing resin composition is preferably 20 to 1000 parts, more preferably 50 to 500 parts, by mass per 100 parts by mass of the sum of the cyanate ester resin (A), epoxy resin (B), and active hydrogen-containing amine latent curing agent (C).

The curing resin composition of the invention may be used as dissolved in various solvents, preferably organic solvents. Examples of suitable organic solvents include ethers, such as tetrahydrofuran, 1,2-dimethoxyethane, and 1,2-diethoxyethane; alcohols, such as isobutanol, n-butanol, isopropyl alcohol, n-propanol, amyl alcohol, benzyl alcohol, furfuryl alcohol, and tetrahydrofurfuryl alcohol; ketones, such as methyl ethyl ketone, methyl isopropyl ketone, and methyl butyl ketone; aromatic hydrocarbons, such as benzene, toluene, and xylene; triethylamine, pyridine, dioxane, and acetonitrile.

The curing resin composition of the invention may further contain other various additives according to necessity. Useful additives include phenol compounds, such as biphenol; reactive diluents, such as monoalkyl glycidyl ethers; nonreactive diluents (plasticizers), such as dioctyl phthalate, dibutyl phthalate, benzyl alcohol, and coal tar; reinforcing materials, such as glass cloth, aramid cloth, and carbon fiber; pigments; lubricants, such as candelilla wax, carnauba wax, Japan tallow, Chinese insect wax, bees wax, lanolin, spermaceti, montan wax, petroleum wax, aliphatic waxes, aliphatic esters, aliphatic ethers, aromatic esters, and aromatic ethers; thickeners; thixotropic agents; anti-foaming agents; rust inhibitors; colloidal silica, colloidal alumina, carbon black, titan black, benzimidazolidinone, dicyclohexylurea; and other commonly used additives. Tacky resins, such as xylene resins and petroleum resins, may be used in combination.

The components other than the cyanate ester resin (A), epoxy resin (B), active hydrogen-containing amine latent curing agent (C), and ion scavenger (D), excluding a filler and a solvent, should be used in amounts that do not affect the curing properties and antifogging properties. The total amount of these other components (except a filler and a solvent) is preferably not more than 10 mass%, more preferably not more than 5 mass%, relative to the solids content of the curing resin composition so that there is enough space within the composition to accommodate sufficient quantities of components (A) to (D).

The curing resin composition of the invention is cured by heating to, e.g., 80° to 200°C to provide a cured product with desired physical properties. The curing resin composition of the invention is useful as a one-component curing resin composition that cures on heating.

The curing resin composition of the invention is applicable to coatings or adhesives for concrete, cement mortar, various metals, leather, glass, rubber, plastics, wood, cloth, paper, and so forth. It is especially suited for use as coatings or adhesives for optical materials because of its superiority in fast curing properties, heat resistance, and antifogging properties.

When a cured product of the curing resin composition is left to stand at a temperature of 50° to 100°C and a relative humidity of 0% to 90%, particularly in a high temperature and high humidity environment for a long period of time, e.g., over 500 hours, it effectively prevents fogging of optical elements, such as lenses, mirrors, prisms, filters, and fibers; solar cell components, such as solar panels; and display components, such as liquid crystal panels and touch panels.

### Examples

The invention will now be illustrated in greater detail with reference to Examples, but it should be understood that the invention is not deemed to be limited thereto.

### Preparation Example 1 - Synthesis of modified polyamine

In a flask was placed 201 g (2.71 mol) of 1,2-diaminopropane and heated to 60°C. To the flask was added 580 g (3.05 eq) of Adeka Resin EP-4100E (bisphenol A epoxy resin, from Adeka Corp.; epoxy eq: 190) in small portions so that the system temperature might be kept between 100° and 110°C. After completion of the addition of Adeka Resin EP-4100E, the reaction system temperature was elevated to 140°C, at which the reaction was continued for 1.5 hours to give a modified polyamine.

To 100 g of the resulting modified polyamine was added 30 g of MP-800K (phenol resin from Asahi Yukizai Corp.; softening point: 100°C). The unreacted substance was removed by vacuum degassing at 180° to 190°C and 30 to 40 Torr over a period of 1 hour, and the solid was pulverized using a jet mill to make latent curing agent EH-1 (1 Torr = 133.322 Pa).

### Examples 1 to 4 and Comparative Example 1

The components shown in Table 1 below were mixed to prepare a resin composition. The resin composition was evaluated for degree of cure and antifogging properties as described below. The results of evaluation are shown in Table 1. The numerical values of the compositional makeup shown in Table 1 indicate parts by mass. In Table 1, the row header "Ion Scavenger to Resin Ratio" indicates the mass ratio of component (D) to the sum of components (A) to (C).

### Degree of cure:

The resin composition placed in an aluminum pan, and the total heat of reaction of the resin composition was measured by DSC. Separately, the resin composition placed in an aluminum pan was heat cured in an oven set at 120°C for 1 hour, and the residual heat of reaction was measured by DSC. The degree of cure (%) was calculated from formula: Degree of cure (%) = [(total heat of reaction - residual heat of reaction)/total heat of reaction] × 100

### Antifogging properties:

A quantity of 0.1 g of the resin composition was thinly spread in the center of a glass dish (75 mm outer diameter, 20 mm height) and heat cured in an oven set at 120°C for 1 hour. The dish was covered with a lid with a gap of about 500 µm and placed in a thermohygrostat set at 85°C and 85% RH for a maximum of 2000 hours. The dish was taken out of the thermohygrostat, and the surface of the glass surrounding the cured product was observed with an optical microscope. The antifogging properties were rated on a scale of A to D based on the time until fogging occurred.
A: Little fogging was observed within 2000 hours.
B: Little fogging was observed up to 1000 hours, but fogging occurred by 2000 hours.
C: Little fogging was observed up to 500 hours, but fogging occurred by 1000 hours.
D: Fogging was observed by 500 hours.

**Table 1**

| | | | Example 1 | Example 2 | Example 3 | Example 4 | Compara. Example 1 |
|---|---|---|---|---|---|---|---|
| | Epoxy Resin | EP-1 | 2.0 | 2.0 | 2.0 | 2.0 | 2.0 |
| | | EP-2 | 2.0 | 2.0 | 2.0 | 2.0 | 2.0 |
| | | EP-3 | 1.0 | 1.0 | 1.0 | 1.0 | 1.0 |
| | Cyanate Ester Resin | CY-1 | 15.0 | 15.0 | 15.0 | 15.0 | 15.0 |
| Composition | Curing Agent | EH-1 | 7.0 | 7.0 | 7.0 | 7.0 | 7.0 |
| | Filler | Silica | 70.0 | 70.0 | 70.0 | 70.0 | 70.0 |
| | Ion Scavenger | IC-1 | 1.0 | 0.5 | 0.3 | 0.1 | 0.0 |
| | Total | | 98.0 | 97.5 | 97.3 | 97.1 | 97.0 |
| | Ion Scavenger to Resin Ratio (wt%) | | 3.8 | 2.0 | 1.0 | 0.4 | 0.0 |
| Rating | Antifogging Properties | | A | B | C | C | D |
| | Degree of Cure (%) | | 90 | 90 | 90 | 90 | 90 |

| | | | | | | | |
|---|---|---|---|---|---|---|---|
| EP-1: EP-4300E, a bisphenol A epoxy resin (polyglycidyl ether compound of polynuclear polyhydric phenol compound) from Adeka Corp. EP-2: EP-3950S, an aminophenol epoxy resin (epoxy compound having a glycidylamino group) from Adeka Corp. EP-3: EP-4088S, a dicyclopentadiene epoxy resin (polyglycidyl ether compound of dicyclopentadienedimethanol) from Adeka Corp. CY-1: Lecy, a bisphenol cyanate ester resin from Lonza. Silica: 200SX-E1 from Admatechs Co., Ltd. IC-1: IXEPLAS-A1, an Mg, Al, Zr-containing ion scavenger (median diameter: 0.5 µm, ion exchange capacity: Na⁺ 1 to 10 meq/g as stated in the catalog) from Toagosei Co., Ltd. | | | | | | | |

As demonstrated in Examples, the curing resin composition of the invention exhibits excellent curing properties with no reduction in degree of cure, and a cured product obtained therefrom is superior in antifogging performance in a high temperature and high humidity environment.

### Industrial Applicability

The curing resin composition of the invention exhibits excellent curing properties and produces a cured product that shows excellent antifogging properties in a high temperature and high humidity environment. Therefore, it is suited for use as, for example, an adhesive for optical components.

## Claims

1. A curing resin composition comprising (A) a cyanate ester resin, (B) an epoxy resin, (C) an active hydrogen-containing amine latent curing agent, and (D) an ion scavenger.

2. The curing resin composition according to claim 1, wherein the cyanate ester resin (A) is at least one member selected from the group consisting of a compound represented by formula (1) below; a compound represented by formula (2) below; and a polymer comprising at least one of the compound of formula (1) and the compound of formula (2).
NC - O - A¹ - Y¹ - A² - O - CN (1)
(wherein Y¹ represents a divalent hydrocarbon group optionally substituted with a fluorine atom or a cyanato group, -O-, -S-, or a single bond; and A¹ and A² each independently represent a phenylene group optionally substituted with one to four alkyl groups); 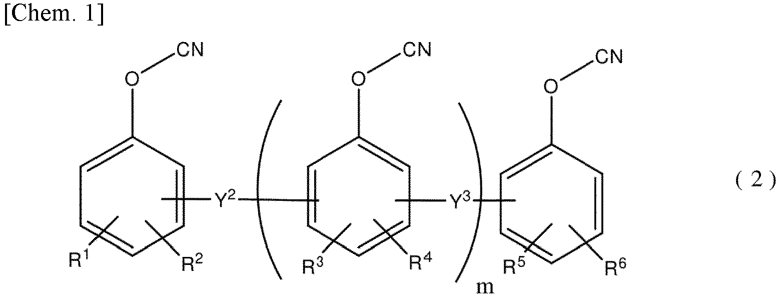
(wherein m is an integer of 1 or greater; Y² and Y³ each independently represent -S- or a divalent hydrocarbon group optionally substituted with a fluorine atom or a cyanato group; and R¹, R², R³, R⁴, R⁵, and R⁶ each independently represent a hydrogen atom or an alkyl group with 1 to 4 carbon atoms.)

3. The curing resin composition according to claim 2, wherein Y¹ in formula (1) and Y² and Y³ in formula (2) are each independently at least one of groups of formulae (Y-1) to (Y-9): 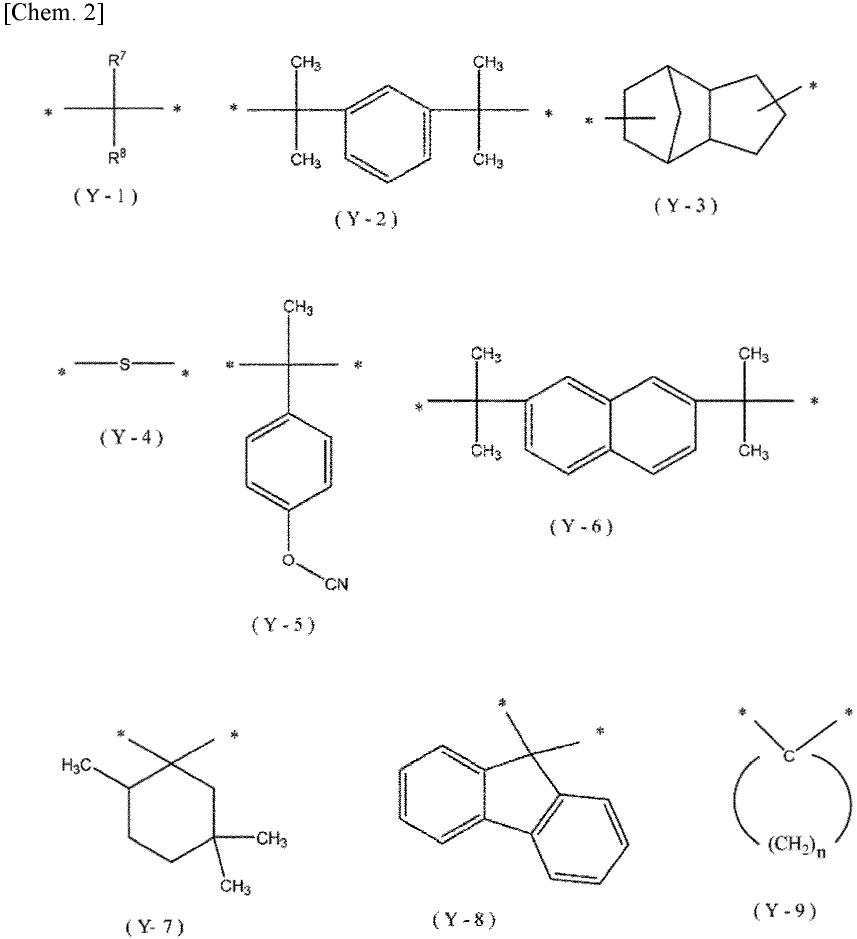 wherein n represents an integer of 4 to 12; R⁷ and R⁸ each independently represent a hydrogen atom or a methyl group optionally substituted with a fluorine; and * indicates a bond.

4. The curing resin composition according to any one of claims 1 to 3, wherein the active hydrogen-containing amine latent curing agent (C) is at least one of:
(C-1) a modified amine obtained by the reaction between an amine compound having at least one active hydrogen and an epoxy compound,
(C-2) a modified amine obtained by the reaction between an amine compound having at least one active hydrogen and an isocyanate compound,
(C-3) a modified amine obtained by the reaction between an amine compound having at least one active hydrogen, an epoxy compound, and an isocyanate compound, and
(C-4) a latent curing agent containing a phenol resin in addition to at least one of modified amine selected from (C-1), (C-2), or (C-3).

5. The curing resin composition according to claim 4, wherein the active hydrogen-containing amine latent curing agent (C) is the latent curing agent (C-4).

6. The curing resin composition according to any one of claims 1 to 5, wherein the ion scavenger (D) has an ion exchange capacity of 1.0 meq/g or more.

7. The curing resin composition according to any one of claims 1 to 6, wherein the ion scavenger(D)is inorganic fine particles.

8. The curing resin composition according to claim 7, wherein the ion scavenger (D) is inorganic fine particles containing at least one metal element selected from zirconium, antimony, bismuth, aluminum, magnesium, yttrium, lanthanum, and neodymium.

9. The curing resin composition according to claim 8, wherein the ion scavenger (D) is inorganic fine particles containing magnesium, aluminum, and zirconium.

10. A cured product obtained by curing the curing resin composition according to any one of claims 1 to 9.

11. An adhesive comprising the curing resin composition according to any one of claims 1 to 9.

## Patentansprüche

1. Härtende Harzzusammensetzung, die (A) ein Cyanatesterharz, (B) ein Epoxidharz, (C) ein latentes, aktiven Wasserstoff enthaltendes Aminhärtungsmittel und (D) einen Ionenfänger umfasst.

2. Härtende Harzzusammensetzung nach Anspruch 1, wobei das Cyanatesterharz (A) mindestens ein Mitglied ist, das aus der Gruppe ausgewählt ist, die aus einer durch die nachstehende Formel (1) dargestellten Verbindung, einer durch die nachstehende Formel (2) dargestellten Verbindung und einem Polymer besteht, das mindestens eine der Verbindungen der Formel (1) und der Verbindung der Formel (2) umfasst.
NC - O - A¹ - Y¹ - A² - O - CN (1)
(wobei Y¹ eine zweiwertige Kohlenwasserstoffgruppe darstellt, die gegebenenfalls mit einem Fluoratom oder einer Cyanatogruppe, -O-, -S- oder einer Einfachbindung substituiert ist; und A¹ und A² jeweils unabhängig voneinander eine Phenylengruppe darstellen, die gegebenenfalls mit einer bis vier Alkylgruppen substituiert ist); 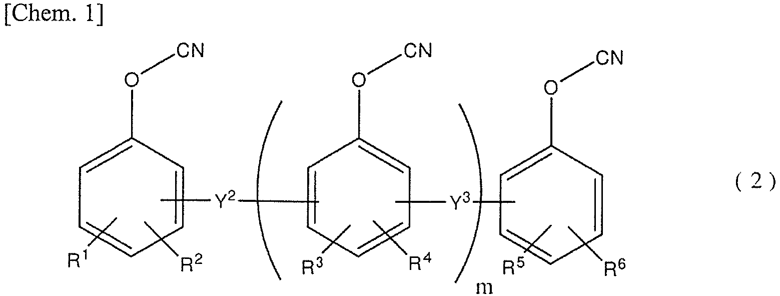
(wobei m eine ganze Zahl von 1 oder größer ist; Y² und Y³ jeweils unabhängig voneinander -S- oder eine zweiwertige Kohlenwasserstoffgruppe darstellen, die gegebenenfalls mit einem Fluoratom oder einer Cyanatogruppe substituiert ist; und R¹, R², R³, R⁴, R⁵ und R⁶ jeweils unabhängig voneinander ein Wasserstoffatom oder eine Alkylgruppe mit 1 bis 4 Kohlenstoffatomen darstellen).

3. Härtende Harzzusammensetzung nach Anspruch 2, wobei Y¹ in Formel (1) und Y² und Y³ in Formel (2) jeweils unabhängig voneinander mindestens eine der Gruppen der Formeln (Y-1) bis (Y-9) sind: 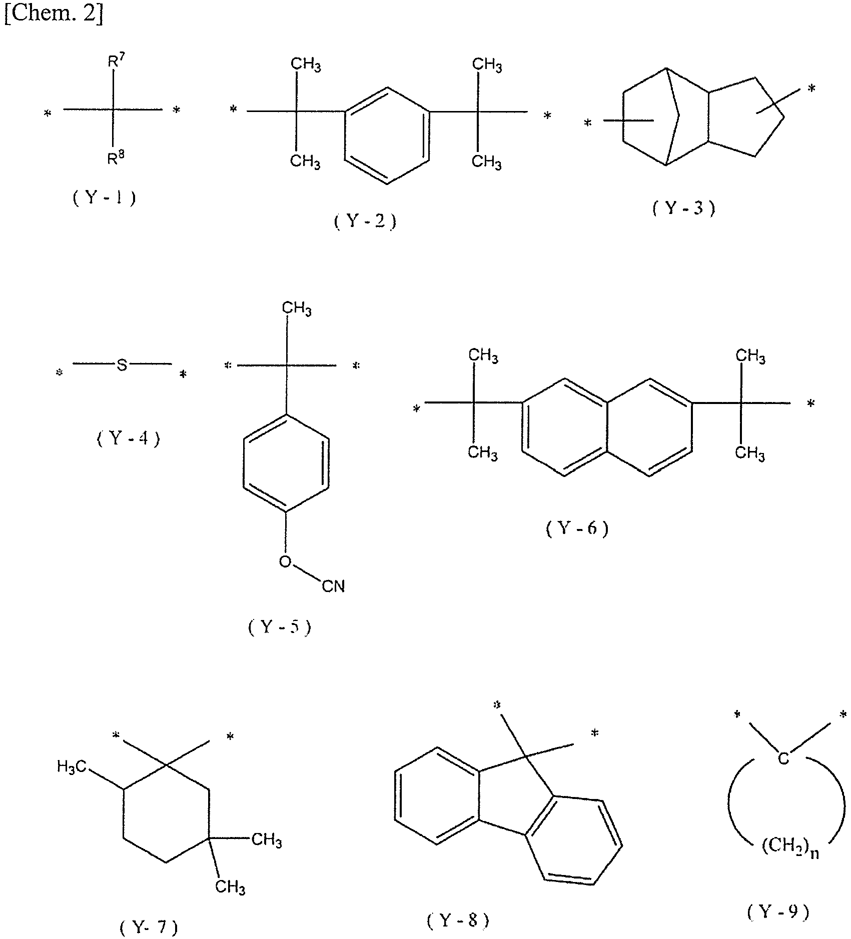 wobei n eine ganze Zahl von 4 bis 12 darstellt; R⁷ und R⁸ jeweils unabhängig voneinander ein Wasserstoffatom oder eine gegebenenfalls mit einem Fluoratom substituierte Methylgruppe darstellen; und * eine Bindung bezeichnet.

4. Härtende Harzzusammensetzung nach einem der Ansprüche 1 bis 3, wobei das latente, aktiven Wasserstoff enthaltende Aminhärtungsmittel (C) mindestens eines der folgenden ist:
(C-1) ein modifiziertes Amin, das durch die Reaktion zwischen einer Aminverbindung mit mindestens einem aktiven Wasserstoff und einer Epoxidverbindung erhalten wird,
(C-2) ein modifiziertes Amin, das durch die Reaktion zwischen einer Aminverbindung mit mindestens einem aktiven Wasserstoffatom und einer Isocyanatverbindung erhalten wird,
(C-3) ein modifiziertes Amin, das durch die Reaktion zwischen einer Aminverbindung mit mindestens einem aktiven Wasserstoff, einer Epoxyverbindung und einer Isocyanatverbindung erhalten wird und
(C-4) ein latentes Härtungsmittel, das ein Phenolharz zusätzlich zu mindestens einem der modifizierten Amine, ausgewählt aus (C-1), (C-2) oder (C-3) enthält.

5. Härtende Harzzusammensetzung nach Anspruch 4, wobei das latente aktiven Wasserstoff enthaltende Aminhärtungsmittel (C) das latente Härtungsmittel (C-4) ist.

6. Härtende Harzzusammensetzung nach einem der Ansprüche 1 bis 5, wobei der Ionenfänger (D) eine Ionenaustauschkapazität von 1,0 meq/g oder mehr aufweist.

7. Härtende Harzzusammensetzung nach einem der Ansprüche 1 bis 6, wobei der Ionenfänger (D) anorganische feine Teilchen sind.

8. Härtende Harzzusammensetzung nach Anspruch 7, wobei der Ionenfänger (D) anorganische feine Teilchen sind, die mindestens ein Metallelement, ausgewählt aus Zirkonium, Antimon, Wismut, Aluminium, Magnesium, Yttrium, Lanthan und Neodym, enthalten.

9. Härtende Harzzusammensetzung nach Anspruch 8, wobei der Ionenfänger (D) anorganische feine Teilchen sind, die Magnesium, Aluminium und Zirkonium enthalten.

10. Gehärtetes Produkt, erhalten durch Härten der härtenden Harzzusammensetzung nach einem der Ansprüche 1 bis 9.

11. Klebstoff, der die härtende Harzzusammensetzung nach einem der Ansprüche 1 bis 9 enthält.

## Revendications

1. Composition de résine durcissante comprenant (A) une résine ester de cyanate, (B) une résine époxy, (C) un agent de durcissement latent à base d'amine contenant de l'hydrogène active, et (D) un piégeur d'ions.

2. Composition de résine durcissante selon la revendication 1, dans laquelle la résine ester de cyanate (A) est au moins un membre choisi dans le groupe constitué d'un composé représenté par la formule (1) ci-dessous; un composé représenté par la formule (2) ci-dessous; et un polymère comprenant au moins un des composés de la formule (1) et du composé de la formule (2).
NC - O - A¹ - Y¹ - A² - O - CN (1)
(où Y¹ représente un groupe d'hydrocarbures divalent éventuellement substitué par un atome de fluor ou un groupe cyanato, -O-, -S-, ou une liaison simple; et A¹ et A² représentent chacun indépendamment un groupe phénylène éventuellement substitué par un à quatre groupes alkyles) ; 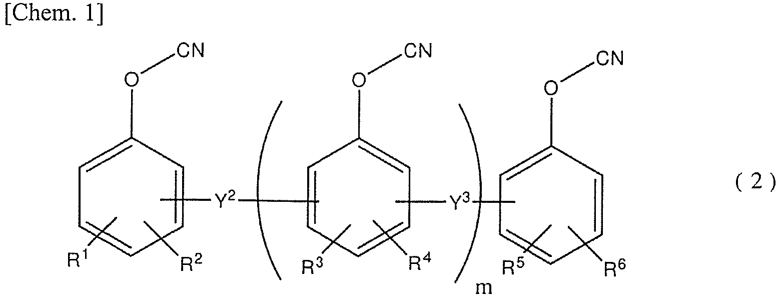
(où m est un nombre entier égal ou supérieur à 1; Y² et Y³ représentent chacun indépendamment -S- ou un groupe d'hydrocarbures divalent éventuellement substitué par un atome de fluor ou un groupe cyanato; et R¹, R², R³, R⁴, R⁵ et R⁶ représentent chacun indépendamment un atome d'hydrogène ou un groupe d'alkyle ayant de 1 à 4 atomes de carbone).

3. Composition de résine durcissante selon la revendication 2, dans laquelle Y¹ dans la formule (1) et Y² et Y³ dans la formule (2) sont chacun indépendamment au moins un des groupes des formules (Y-1) à (Y-9): 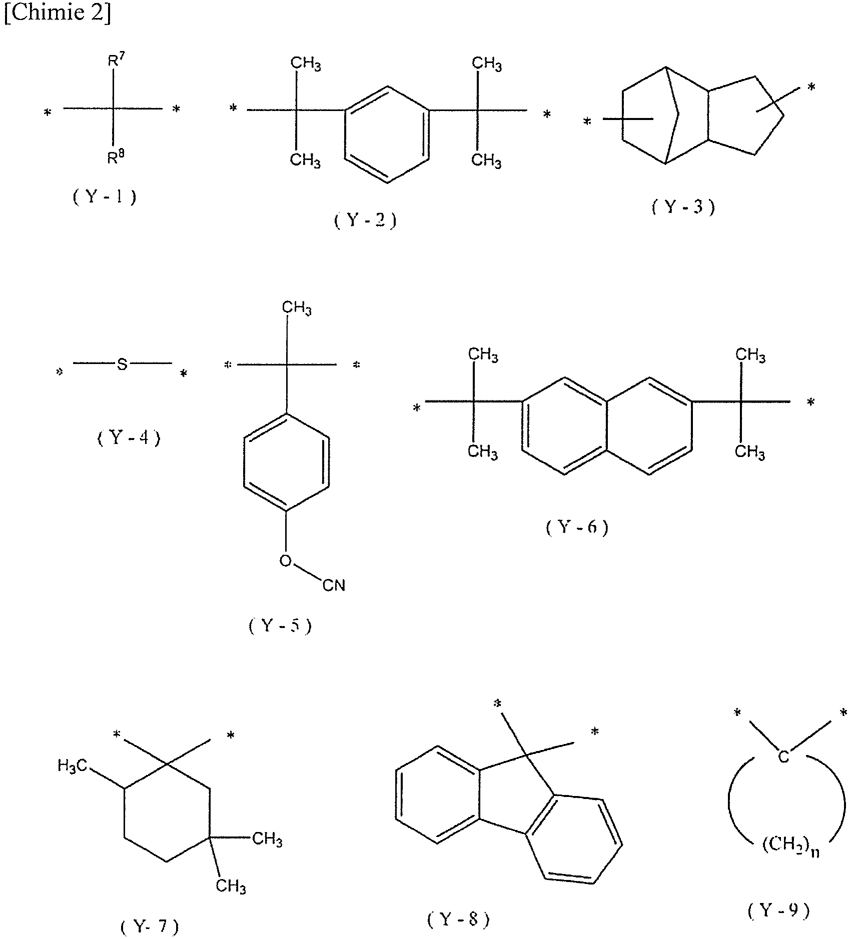 où n représente un nombre entier de 4 à 12 ; R⁷ et R⁸ représentent chacun indépendamment un atome d'hydrogène ou un groupe méthyle éventuellement substitué par un fluor ; et * indique une liaison.

4. Composition de résine durcissante selon l'une quelconque des revendications 1 à 3, dans laquelle l'agent de durcissement latent à base d'amine contenant de l'hydrogène actif (C) est au moins l'un parmi :
(C-1) une amine modifiée obtenue par la réaction entre un composé aminé ayant au moins un hydrogène actif et un composé époxy,
(C-2) une amine modifiée obtenue par réaction entre un composé aminé ayant au moins un hydrogène actif et un composé isocyanate,
(C-3) une amine modifiée obtenue par réaction entre un composé aminé ayant au moins un hydrogène actif, un composé époxyde et un composé isocyanate, et
(C-4) un agent de durcissement latent contenant une résine phénolique en plus d'au moins une amine modifiée choisie parmi (C-1), (C-2) ou (C-3).

5. Composition de résine durcissante selon la revendication 4, dans laquelle l'agent de durcissement latent à base d'amine contenant de l'hydrogène active (C) est l'agent de durcissement latent (C-4).

6. Composition de résine durcissante selon l'une des revendications 1 à 5, dans laquelle le piégeur d'ions (D) a une capacité d'échange d'ions de 1,0 meq/g ou plus.

7. Composition de résine durcissante selon l'une des revendications 1 à 6, dans laquelle le piégeur d'ions (D) est constitué de fines particules inorganiques.

8. Composition de résine durcissante selon la revendication 7, dans laquelle le piégeur d'ions (D) est constitué de fines particules inorganiques contenant au moins un élément métallique choisi parmi le zirconium, l'antimoine, le bismuth, l'aluminium, le magnésium, l'yttrium, le lanthane et le néodyme.

9. Composition de résine durcissante selon la revendication 8, dans laquelle le capteur d'ions (D) est constitué de fines particules inorganiques contenant du magnésium, de l'aluminium et du zirconium.

10. Produit durci obtenu par durcissement de la composition de résine durcissante selon l'une des revendications 1 à 9.

11. Adhésif comprenant la composition de résine durcissante selon l'une des revendications 1 à 9.
